# EUROPEAN PATENT APPLICATION

(11) **EP 4 440 215 A1**
(43) Date of publication of application: **02.10.2024**
(21) Application number: 21965157.7
(22) Date of filing: 25.11.2021
(51) Int. Cl.: H04W 68/00, H04W 48/02

(54) **INFORMATION TRANSMISSION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Gunzelmann, Rainer
(86) International application number: PCT/CN2021/133283
(87) International publication number: WO 2023/092422

(57) **Abstract**

Embodiments of the present invention relate to an information transmission method and apparatus, a communication device, and a storage medium. A first communication node sends first information to a second communication node, wherein the first information is at least used for determining the type of a user equipment (UE) which is not allowed to reside in the first communication node or a cell of the first communication node.

## Description

### TECHNICAL FIELD

The disclosure relates to, but is not limited to, a field of wireless communication technologies, more particular to, an information transmission method, an information transmission apparatus, a communication device and a storage medium.

### BACKGROUND

When a core communication network device needs to send data to a user equipment (UE), it sends a paging message to a base station. The base station then sends the paging message within cells belonging to a Tracking Area (TA) list according to TA list information in the paging message sent by the core network. The UE receives the paging message sent by the base station at its own paging occasion. Usually, one TA may span multiple base stations or cells under multiple base stations.

### SUMMARY

In view of this, embodiments of the disclosure provide an information transmission method, an information transmission apparatus, a communication device and a storage medium.

According to a first aspect of embodiments of the disclosure, an information transmission method is provided. The method is applied to a first communication node and includes:
sending a first information to a second communication node, in which the first information is at least used to determine a type of a user equipment (UE) that is not allowed to reside on the first communication node or to reside in a cell of the first communication node.

In an embodiment, the sending the first information to the second communication node, includes one of following:
sending a next generation (NG) SETUP Request message including the first information to the second communication node;
sending an Xn SETUP Request message including the first information to the second communication node; or
sending an Xn SETUP Response message including the first information to the second communication node.

In an embodiment, the method further includes:
receiving a paging message from the second communication node, in which the paging message includes a second information, and the second information at least indicates a type of a UE paged by the paging message.

In an embodiment, the method further includes:
sending the paging message in response to determining, based on the second information, that the first communication node allows access of the type of the UE paged by the paging message;
   or,
ignoring the paging message in response to determining, based on the second information, that the first communication node does not allow access of the type of the UE paged by the paging message.

In an embodiment, the first communication node is a Radio Access Network (RAN) node, and the second communication node is a core network node;
or,
the first communication node and the second communication node are different RAN nodes.

According to a second aspect of embodiments of the disclosure, an information transmission method is provided. The method is applied to a second communication node and includes:
receiving a first information from a first communication node, in which the first information is at least used to determine a type of a user equipment (UE) that is not allowed to reside on the first communication node or to reside in a cell of the first communication node.

In an embodiment, the method further includes:
withholding from sending a paging message to the first communication node, in response to determining that a type of a UE paged by the paging message is the type of the UE that is not allowed to reside on the first communication node;
   or;
withholding from sending a paging message to the first communication node, in response to determining that a type of a UE paged by the paging message is the type of the UE that is not allowed to reside in the cell of the first communication node.

In an embodiment, the receiving the first information from the first communication node, includes one of following:
receiving an NG SETUP Request message including the first information from the first communication node;
receiving an Xn SETUP Request message including the first information from the first communication node; or
receiving an Xn SETUP Response message including the first information from the first communication node.

In an embodiment, the method further includes:
sending a paging message to the first communication node, in which the paging message includes a second information, and the second information at least indicates a type of a UE paged by the paging message.

In an embodiment, the first communication node is a RAN node, and the second communication node is a core network node;
or,
the first communication node and the second communication node are different RAN nodes.

According to a third aspect of embodiments of the disclosure, an information transmission apparatus is provided. The apparatus is applied to a first communication node and includes:
a first sending module, configured to send a first information to a second communication node, in which the first information is at least used to determine a type of a UE that is not allowed to reside on the first communication node or to reside in a cell of the first communication node.

In an embodiment, the first sending module is further configured to perform one of following:
sending an NG SETUP Request message including the first information to the second communication node;
sending an Xn SETUP Request message including the first information to the second communication node; or
sending an Xn SETUP Response message including the first information to the second communication node.

In an embodiment, the apparatus further includes:
a first receiving module, configured to receive a paging message from the second communication node, in which the paging message includes a second information, and the second information at least indicates a type of a UE paged by the paging message.

In an embodiment, the apparatus further includes: a second sending module configured to:
send the paging message in response to determining, based on the second information, that the first communication node allows access of the type of the UE paged by the paging message;
   or,
ignore the paging message in response to determining, based on the second information, that the first communication node does not allow access of the type of the UE paged by the paging message.

In an embodiment, the first communication node is a RAN node, and the second communication node is a core network node;
or,
the first communication node and the second communication node are different RAN nodes.

According to a fourth aspect of embodiments of the disclosure, an information transmission apparatus is provided. The apparatus is applied to a second communication node and includes:
a second receiving module, configured to receive a first information from a first communication node, in which the first information is at least used to determine a type of a UE that is not allowed to reside on the first communication node or to reside in a cell of the first communication node.

In an embodiment, the apparatus further includes: a third sending module configured to:
withholding from sending a paging message to the first communication node, in response to determining that a type of a UE paged by the paging message is the type of the UE that is not allowed to reside on the first communication node;
   or;
withholding from sending a paging message to the first communication node, in response to determining that a type of a UE paged by the paging message is the type of the UE that is not allowed to reside in the cell of the first communication node.

In an embodiment, the second receiving module is configured to perform one of following:
receiving an NG SETUP Request message including the first information from the first communication node;
receiving an Xn SETUP Request message including the first information from the first communication node; or
receiving an Xn SETUP Response message including the first information from the first communication node.

In an embodiment, the apparatus further includes:
a fourth sending module, configured to send a paging message to the first communication node, in which the paging message includes a second information, and the second information at least indicates a type of a UE paged by the paging message.

In an embodiment, the first communication node is a RAN node, and the second communication node is a core network node;
or,
the first communication node and the second communication node are different RAN nodes.

According to a fifth aspect of embodiments of the disclosure, a communication device is provided. The communication device includes a processor, a memory and executable programs stored on the memory and executable by the processor. When the executable programs are executed by the processor, the steps of the information transmission method of the first aspect or the second aspect are implemented.

According to a sixth aspect of embodiments of the disclosure, a storage medium having executable programs stored thereon is provided. When the executable programs are executed by a processor, the steps of the information transmission method of the first aspect or the second aspect are implemented.

According to an information transmission method, an information transmission apparatus, a communication device and a storage medium provided by embodiments of the disclosure, a first communication node sends first information to a second communication node. The first information is at least used to determine a type of a UE that is not allowed to reside on the first communication node or to reside in a cell of the first communication node. In this way, according to the first information, the second communication node can determine the type of the UE that is not allowed to reside on the first communication node or to reside in the cell of the first communication node. Therefore, the second communication node can obtain a capability of an access layer of the first communication node to access different types of UEs. The second communication node may determine, based on the capability of the access layer of the first communication node to access different types of UEs, to send signalings that are transmitted by the first communication node to different types of UEs to the first communication node, such as a paging message, access resource configuration information for different types of UEs, and the like. The occurrences of the situation where the second communication node sends all the signalings for different types of UEs to the first communication node when different types of UEs are not distinguished can be reduced, thereby reducing a signaling overhead between the first communication node and the second communication node.

It should be understood that the foregoing general description and the following detailed description are exemplary and explanatory only and do not limit embodiments of the disclosure.

### BRIEF DESCRIPTION OF THE DRAWINGS

The accompanying drawings, which are incorporated in and constitute a part of this specification, illustrate embodiments consistent with the disclosure and together with the description serve to explain the principles of embodiments of the disclosure.
FIG. 1 is a schematic diagram of a wireless communication system illustrated according to an embodiment.
FIG. 2 is a flowchart of an information transmission method illustrated according to an embodiment.
FIG. 3 is a flowchart of another information transmission method illustrated according to an embodiment.
FIG. 4 is a flowchart of another information transmission method illustrated according to an embodiment.
FIG. 5 is a flowchart of an information transmission method illustrated according to an embodiment.
FIG. 6 is a flowchart of another information transmission method illustrated according to an embodiment.
FIG. 7 is a flowchart of another information transmission method illustrated according to an embodiment.
FIG. 8 is a block diagram of an information transmission apparatus illustrated according to an embodiment.
FIG. 9 is a block diagram of an information transmission apparatus illustrated according to an embodiment.
FIG. 10 is a block diagram of an information transmission device illustrated according to an embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with embodiments of the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in this disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

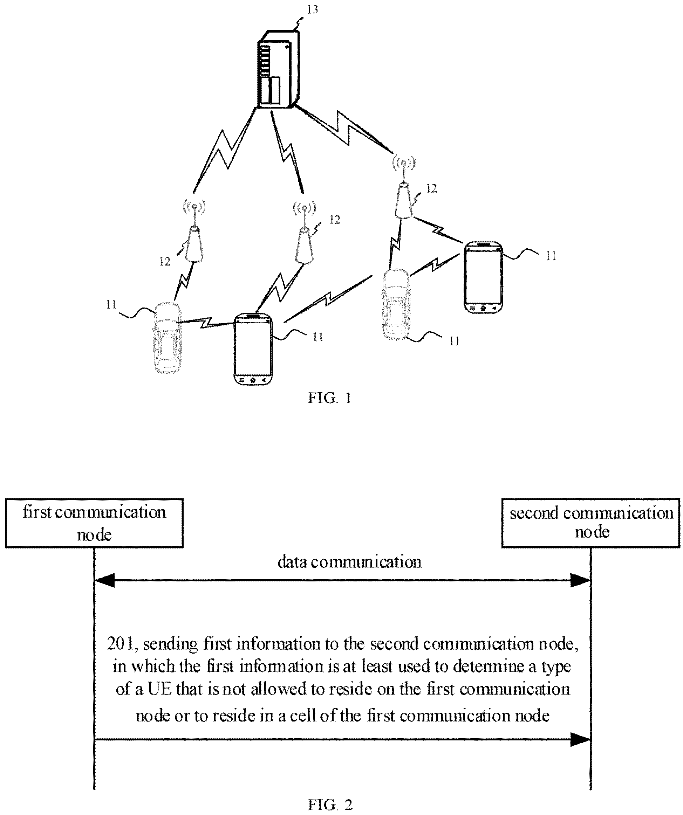

FIG. 1 is a schematic diagram of a wireless communication system according to an embodiment of the disclosure. As illustrated in FIG. 1, the wireless communication system is a communication system based on the cellular mobile communication technology. The wireless communication system may include: a plurality of terminals 11 and a plurality of base stations 12.

The terminal 11 may be a device that provides voice and/or data connectivity to a user. The terminal 11 may communicate with one or more core networks via a Radio Access Network (RAN). The terminal 11 may be an Internet of Things (IoT) terminal, such as a sensor device, a mobile phone (or "cellular" phone), and a computer with the IoT terminal. The terminal 11 may also be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a user equipment (UE). Or, the terminal 11 may be an unmanned aerial vehicle device. Or, the terminal 11 may be an in-vehicle device, for example, an electronic control unit (ECU) having a wireless communication function, or a wireless communication device external to the ECU. Or, the UE 11 can also be a roadside device, for example, a street light, a signal light, or other roadside devices having the wireless communication function.

The base station 12 may be a network side device in the wireless communication system. The wireless communication system may be the 4th Generation (4G) mobile communication system, also known as a Long Term Evolution (LTE) system. Or, the wireless communication system may also be a 5G system, also known as a New Radio (NR) system or a 5G NR system. Or, the wireless communication system may be any next generation system of the 5G system. The RAN in the 5G system may be called a New Generation (NG)-RAN. Or, the wireless communication system may be a machine type communication (MTC) system.

The base station 12 can be an evolved base station (eNB) employed in the 4G system. Or, the base station 12 may be a base station (gNB) with a centralized distributed architecture employed in the 5G system. When the base station 12 adopts the centralized distributed architecture, it usually includes a Central Unit (CU) and at least two Distributed Units (DUs). The CU is equipped with a protocol stack of a Packet Data Convergence Protocol (PDCP) layer, a Radio Link Control (RLC) layer, or a Media Access Control (MAC) layer. The DU is equipped with a protocol stack of a physical (PHY) layer. The specific implementation of the base station 12 is not limited in the embodiment of the disclosure.

A wireless connection can be established between the base station 12 and the terminal 11 via a radio interface. In different implementations, the radio interface is a radio interface based on the 4G standard. Or, the radio interface is a radio interface based on the 5G standard, such as a NR. Or, the radio interface may also be a radio interface based on the standard of the next generation of 5G.

In some embodiments, End to End (E2E) connections can also be established between the terminals 11 in scenarios, such as, Vehicle to Vehicle (V2V) communication, Vehicle to Infrastructure (V2I) communication, and Vehicle to Pedestrian (V2P) communication in Vehicle to Everything (V2X) communication.

In some embodiments, the above wireless communication system may also include a network management device 13.

The plurality of base stations 12 are connected to the network management device 13 respectively. The network management device 13 may be a core network device in the wireless communication system, for example, a Mobility Management Entity (MME) in an Evolved Packet Core (EPC). Or, the network management device may be other core network devices, such as a Serving GateWay (SGW), a Public Data Network GateWay (PGW), a Policy and Charging Rules Function (PCRF), or a Home Subscriber Server (HSS), etc. The implementation form of the network management device 13 is not limited in the embodiments of the disclosure.

The execution entities involved in embodiments of the disclosure include, but are not limited to: UEs such as mobile phones in a cellular mobile communication system, network-side devices, RAN devices such as a base station, and a core network, etc.

In the 3rd Generation Partnership Project (3GPP) standardization, a new type of terminal is proposed, i.e., a Reduced Capability (Redcap) NR device, which can be referred to as a NR-lite or a Redcap terminal. Usually, this type of device is low cost and has a low complexity, it can also provide a certain degree of enhanced coverage and has the characteristic of power saving.

The Redcap terminal can have a single receiving (1Rx) antenna or a dual receiving (2Rx) antenna.

Currently, the network can indicate whether the access of a 1RX Redcap and a 2RX Redcap can be allowed, respectively. For example, the network broadcasts a cell barred (i.e., cellbar) indication for the 1RX Redcap and the 2RX Redcap respectively in a system information block 1 (SIB1). The terminal knows, according to the indication, whether the network allows the terminal to access.

If the base station does not support access of a certain type of terminal, this type of terminal cannot reside on the base station. However, the core network does not seem to know whether this type of terminal has resided on the base station. The core network sends a paging message for the terminal within a range of TA, that is, sends a paging message for the terminal to the base station, which increases unnecessary signaling overhead between the core network and the base station.

Therefore, how to reduce unnecessary signaling overhead between the core network and the base station is a problem to be solved.

FIG. 2 is a flowchart of an information transmission method illustrated according to an embodiment. The method is applied to a first communication node of a cellular mobile communication system. The method includes the following steps.

At step 201, first information is sent to a second communication node, in which the first information is at least used to determine a type of a UE that is not allowed to reside on the first communication node or to reside in a cell of the first communication node.

The first communication node may be a RAN node that communicates with a UE in the cellular mobile communication, such as a base station. The second communication node may be a core network node in the cellular mobile communication. The second communication node may also be a RAN node that communicates with a UE in the cellular mobile communication.

In an embodiment, the first communication node is a RAN node, and the second communication node is a core network node;
or,
the first communication node and the second communication node are different RAN nodes.

For example, the first communication node may be a base station, and the second communication node may be a core network. The second communication node may send a paging message to the first communication node, and the first communication node may transmit the paging message to the UE. The base station may notify the core network of a specific type of a UE that is not allowed to reside on the base station through the first information.

The first communication node may be a non-anchor base station, and the second communication node may be an anchor base station. The second communication node may send a paging message to the first communication node, and the first communication node may transmit the paging message to the UE. The non-anchor base station may notify the anchor base station of the type of the UE that is not allowed to reside on the non-anchor base station through the first information.

Different types of UEs may be classified based on, but not limited to, signal receiving capabilities of the UEs.

For example, the types of UEs include: a first type and a second type. The signal receiving capability of the first type of UE is lower than the signal receiving capability of the second type of UE. The first type of UE may have a lower signal receiving capability than the second type of UE. For example, the first type of UE may have fewer receiving antennas than the second type of UE. For example, the first type of UE may be a Redcap UE, and the second type of UE may be an eMMB UE.

In an embodiment, the Redcap UE may include a 1RX Redcap UE and a 2RX Redcap UE.

The 2RX Redcap UE has two receiving antennas, and the 1 RX Redcap UE has one receiving antenna.

The first information may indicate, in an explicit or implicit manner, the type of the UE that is not allowed to reside on the first communication node or to reside in a cell of the first communication node.

For example, the first information may explicitly indicate the type of the UE that is allowed to reside on the first communication node or to reside in the cell of the first communication node. The second communication node may consider a type of a UE that is not indicated by the first information as the type of the UE that is not allowed to reside on the first communication node or to reside in the cell of the first communication node by default, which may be considered as an implicit indication. The first communication node may also stop residence of a specific type of UE when its load exceeds a preset load threshold. The first communication node may report its own load to the second communication node, so that when the reported load value exceeds the preset load threshold, it may implicitly indicate that the specific type of UE is not allowed to reside on the first communication node or to reside in the cell of the first communication node. The load may include a communication resource load and the like.

When the first information indicates the type of the UE that is not allowed to reside on the first communication node, it may indicate a type of a UE that is not allowed to reside in all the cells of the first communication node, or a type of a UE that is not allowed to reside in one or more cells of the first communication node. The types of the UEs not allowed to reside in different cells may be the same or different.

For example, the first information may indicate that a specific type of UE is allowed to reside on the first communication node, and/or a specific type of UE is not allowed to reside on the first communication node.

For example, the base station can notify the core network that the Redcap UE is not allowed to reside on the base station through the first information. The base station may notify the core network that the 1RX Redcap UE is not allowed to reside on the base station through the first information. The base station may notify the core network that the 2RX Redcap UE is not allowed to reside on the base station through the first information. When the first information indicates that the 2RX Redcap UE is not allowed to reside on the first communication node, it may implicitly indicate that the 1RX Redcap UE is not allowed to reside on the first communication node as well.

In this way, through the first information, the second communication node can determine the type of the UE that is not allowed to reside on the first communication node or to reside in the cell of the first communication node. Therefore, the second communication node can obtain a capability of an access layer of the first communication node to access different types of UEs. The second communication node may determine, based on the capability of the access layer of the first communication node to access different types of UEs, to send signalings that are transmitted by the first communication node to different types of UEs to the first communication node, such as a paging message, access resource configuration information for different types of UEs, and the like. Therefore, the occurrences of the situation where the second communication node sends all the signalings for different types of UEs to the first communication node when different types of UEs are not distinguished can be reduced, thereby reducing a signaling overhead between the first communication node and the second communication node.

In an embodiment, the method further includes: in response to determining that a type of a UE paged by a paging message is the type of the UE that is not allowed to reside on the first communication node, the second communication node withholding from sending the paging message to the first communication node;
or;
in response to determining that a type of a UE paged by a paging message is the type of the UE that is not allowed to reside in the cell of the first communication node, the second communication node withholding from sending the paging message to the first communication node.

When the second communication node has a paging message to be sent to the UE through the first communication node, it can determine whether to send the paging message to the first communication node based on the type of the UE that is allowed or not allowed to reside on the first communication node or to reside in the cell of the first communication node.

If it is determined that the type of the UE paged by the paging message is the type of the UE that is not allowed to reside on the first communication node, it can be determined that the paged UE cannot receive the paging message sent by the first communication node, and thus the second communication node may not send the paging message to the first communication node. Therefore, unnecessary signalings sent by the second communication node to the first communication node can be reduced, thereby improving communication efficiency.

If it is determined that the type of the UE paged by the paging message is the type of the UE that is allowed to reside on the first communication node, it can be determined that the paged UE can receive the paging message sent by the first communication node, and thus the second communication node may send the paging message to the first communication node, which can increase the probability of the UE being paged.

For example, the first communication node is a base station and the second communication node is a core network. When the core network determines that the base station does not allow a specific type of UE to reside through the first information, the core network may not initiate paging of that type of UE to the base station.

For paging of a UE that is in an inactive state, the first communication node is a base station adjacent to an anchor base station, when the anchor base station learns that a certain adjacent base station does not support a specific type of UE to reside, it may not initiate paging of that type of UE to the adjacent base station.

In this way, the second communication node determines whether to send a paging message to the first communication node based on the access capability of the access layer of the first communication node, which can reduce unnecessary signalings sent by the second communication node to the first communication node, thereby improving communication efficiency.

In an embodiment, sending the first information to the second communication node, includes one of following:
sending a next generation (NG) SETUP Request message including the first information to the second communication node;
sending an Xn SETUP Request message including the first information to the second communication node; or
sending an Xn SETUP Response message including the first information to the second communication node.

The NG SETUP Request message is used to request establishment of an NG interface between the core network and the base station. The Xn SETUP Request message is used to request establishment of an Xn interface between base stations. The Xn SETUP Response message is used to respond to a request from a peer base station to establish an Xn interface between base stations.

In an embodiment, the first communication node may send the first information to the second communication node by carrying it in a non-UE-associated signaling.

In an embodiment, for the NR system, when establishing the NG interface, the base station can carry the first information in the NG SETUP Request message.

In an embodiment, for the NR system, when establishing the Xn interface between base stations, the base station may carry the first information in the Xn SETUP Request message or the Xn SETUP Response message.

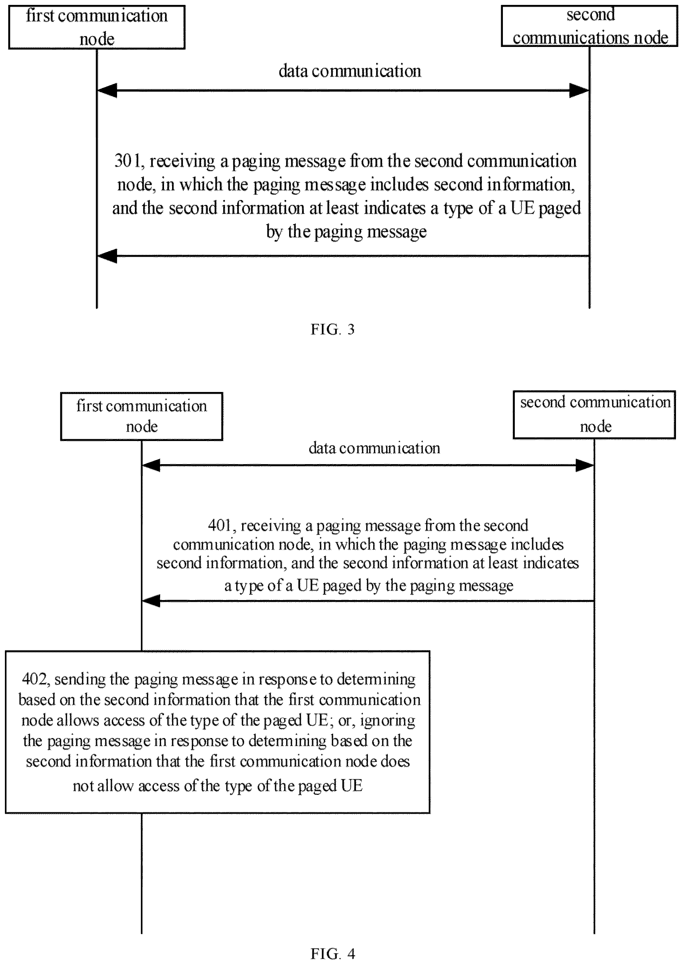

FIG. 3 is a flowchart of an information transmission method illustrated according to an embodiment. The method is applied to a first communication node of a cellular mobile communication system. The method includes the following steps.

At step 302, a paging message is received from a second communication node, in which the paging message includes second information, and the second information at least indicates a type of a UE paged by the paging message.

Step 301 may be implemented alone or in combination with step 201.

The paging message may be a core network paging message or a RAN paging message. When the first communication node is a RAN node and the second communication node is a core network node, the second communication node may send the core network paging message to the first communication node. When the first communication node and the second communication node are different RAN nodes, the second communication node may send the RAN paging message to the first communication node.

When the second communication node has a paging message to be sent to the UE through the first communication node, the paging message may be sent to the first communication node, and the first communication node can transmit it to the UE. The paging message may carry the second information for indicating the type of the UE paged by the paging message.

The first communication node may determine, based on the second information in the paging message, the type of the UE paged by the paging message.

The first communication node may determine whether to send the paging message according to the type of the UE paged by the paging message and whether a certain type of UE is allowed to reside on the first communication node.

In an example, the core network carries the second information in a core network (CN) paging message to indicate the type of the paged UE.

In an example, the CN carries the second information in the CN paging message to indicate that the paged UE is a Redcap UE.

In an example, the CN carries the second information in the CN paging message to indicate that the paged UE is a 1RX Redcap UE or a 2RX Redcap UE.

In an example, the anchor base station carries the second information in the RAN paging message to indicate the type of the paged UE.

In an example, the anchor base station carries the second information in the RAN paging message to indicate that the paged UE is a Redcap UE.

In an embodiment, the anchor base station carries the second information in the RAN paging message to indicate that the paged UE is a 1RX Redcap UE or a 2RX Redcap UE.

FIG. 4 is a flowchart of an information transmission method illustrated according to an embodiment. The method is performed by a first communication node of a cellular mobile communication system. The method includes the following steps.

At step 401, a paging message is received from a second communication node, in which the paging message includes second information, and the second information at least indicates a type of a UE paged by the paging message.

At step 402, the paging message is sent in response to determining, based on the second information, that the first communication node allows access of the type of the paged UE; or, the paging message is ignored in response to determining, based on the second information, that the first communication node does not allow access of the type of the paged UE.

Steps 401 and 402 may be implemented separately or in combination with step 201 and/or step 301.

The paging message may be a CN paging message or a RAN paging message. When the first communication node is a RAN node and the second communication node is a CN node, the second communication node may send the CN paging message to the first communication node. When the first communication node and the second communication node are different RAN nodes, the second communication node may send the RAN paging message to the first communication node.

When the second communication node has a paging message to be sent to the UE through the first communication node, the paging message may be sent to the first communication node and the first communication node transmits it to the UE. The paging message may carry the second information for indicating the type of the UE paged by the paging message.

The first communication node may determine, based on the second information in the paging message, the type of the UE paged by the paging message.

If the first communication node determines that the first communication node allows access of the type of the UE paged by the paging message, i.e., the type of the UE paged by the paging message is allowed to reside on the first communication node, the paging message may be sent.

If the first communication node determines that the first communication node does not allow access of the type of the UE paged by the paging message, i.e., the type of the UE paged by the paging message is not allowed to reside on the first communication node, even if the paging message is sent, the UE cannot be paged, and thus the first communication node may not send the paging message.

In an embodiment, the method further includes:
in response to determining, based on the second information, that a cell of the first communication node allows access of the type of the UE paged by the paging message, sending the paging message in the cell that allows access of the type of the UE paged by the paging message;
   or,
in response to determining, based on the second information, that a cell of the first communication node does not allow access of the type of the UE paged by the paging message, withholding from sending the paging message in the cell that does not allow access of the type of the UE paged by the paging message.

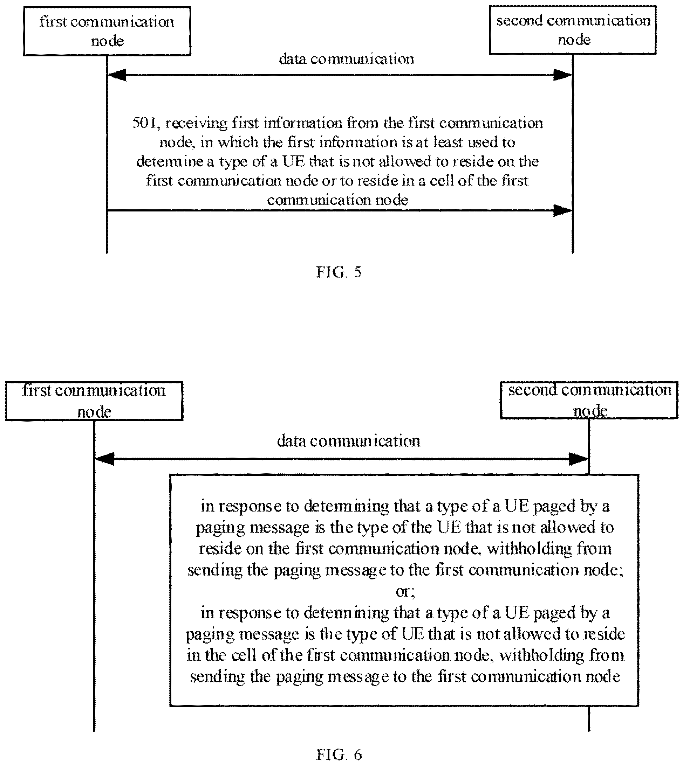

FIG. 5 is a flowchart of an information transmission method illustrated according to an embodiment. The method is performed by a second communication node of a cellular mobile communication system. The method includes the following steps.

At step 501, first information is received from a first communication node, in which the first information is at least used to determine a type of a UE that is not allowed to reside on the first communication node or to reside in a cell of the first communication node.

The first communication node may be a RAN node that communicates with a UE in cellular mobile communication, such as a base station and the like. The second communication node may be a CN node in the cellular mobile communication. The second communication node may also be a RAN node that communicates with a UE in the cellular mobile communication.

In an embodiment, the first communication node is a RAN node, and the second communication node is a CN node;
or,
the first communication node and the second communication node are different RAN nodes.

For example, the first communication node may be a base station, and the second communication node may be a CN. The second communication node may send a paging message to the first communication node, and the first communication node may transmit the paging message to the UE. The base station may notify the CN through the first information that a specific type of UE is not allowed to reside on the base station.

The first communication node may be a non-anchor base station, and the second communication node may be an anchor base station. The second communication node may send a paging message to the first communication node, and the first communication node may transmit the paging message to the UE. The non-anchor base station may notify the anchor base station of the type of the UE that is not allowed to reside on the non-anchor base station through the first information.

Different types of UEs may be classified based on, but not limited to, signal receiving capabilities of the UEs.

For example, the types of UEs include: a first type and a second type. The signal receiving capability of the first type of UE is lower than the signal receiving capability of the second type of UE. The first type of UE may have a lower signal receiving capability than the second type of UE. For example, the first type of UE may have fewer receiving antennas than the second type of UE. For example, the first type of UE may be a Redcap UE, and the second type of UE may be an eMMB UE.

In an embodiment, the Redcap UE may include a 1RX Redcap UE and a 2RX Redcap UE.

The 2RX Redcap UE has two receiving antennas, and the 1 RX Redcap UE has one receiving antenna.

The first information may indicate, in an explicit or implicit manner, the type of the UE that is not allowed to reside on the first communication node or to reside in a cell of the first communication node.

For example, the first information may explicitly indicate the type of the UE that is allowed to reside on the first communication node or to reside in the cell of the first communication node. The second communication node may consider a type of a UE that is not indicated by the first information as the type of the UE that is not allowed to reside on the first communication node or to reside in the cell of the first communication node by default, which may be considered as an implicit indication. The first communication node may also stop residence of a specific type of UE when its load exceeds a preset load threshold. The first communication node may report its own load to the second communication node, so that when the reported load value exceeds the preset load threshold, it may implicitly indicate that the specific type of the UE that is not allowed to reside on the first communication node or to reside in the cell of the first communication node. The load may include a communication resource load and the like.

When the first information indicates the type of the UE that is not allowed to reside on the first communication node, it may indicate a type of a UE that is not allowed to reside in all the cells of the first communication node, or a type of a UE that is not allowed to reside in one or more cells of the first communication node. The types of the UEs not allowed to reside in different cells may be the same or different.

For example, the first information may indicate that a specific type of UE is allowed to reside on the first communication node, and/or a specific type of UE is not allowed to reside on the first communication node.

For example, the base station can notify the CN that the Redcap UE is not allowed to reside on the base station through the first information. The base station may notify the CN that the 1RX Redcap UE is not allowed to reside on the base station through the first information. The base station may notify the CN that the 2RX Redcap UE is not allowed to reside on the base station through the first information. When the first information indicates that the 2RX Redcap UE is not allowed to reside on the first communication node, it may implicitly indicate that the 1RX Redcap UE is not allowed to reside on the first communication node as well.

In this way, through the first information, the second communication node can determine the type of the UE that is not allowed to reside on the first communication node or to reside in the cell of the first communication node. Therefore, the second communication node can obtain a capability of an access layer of the first communication node to access different types of UEs. The second communication node may determine, based on the capability of the access layer of the first communication node to access different types of UEs, to send signalings that are transmitted by the first communication node to different types of UEs to the first communication node, such as a paging message, access resource configuration information for different types of UEs, and the like. Therefore, the occurrences of the situation where the second communication node sends all the signalings for different types of UEs to the first communication node when different types of UEs are not distinguished can be reduced, thereby reducing a signaling overhead between the first communication node and the second communication node.

FIG. 6 is a flowchart of an information transmission method illustrated according to an embodiment. The method is performed by a second communication node of a cellular mobile communication system. The method includes:
in response to determining that a type of a UE paged by a paging message is the type of the UE that is not allowed to reside on the first communication node, withholding from sending the paging message to the first communication node;
   or;
in response to determining that a type of a UE paged by a paging message is the type of the UE that is not allowed to reside in the cell of the first communication node, withholding from sending the paging message to the first communication node.

The steps of the method shown in FIG. 6 may be implemented alone or in combination with step 501.

When the second communication node has a paging message to be sent to the UE through the first communication node, it can determine whether to send the paging message to the first communication node based on the type of the UE that is allowed or not allowed to reside on the first communication node or to reside in the cell of the first communication node.

If it is determined that the type of the UE paged by the paging message is the type of the UE that is not allowed to reside on the first communication node, it can be determined that the paged UE cannot receive the paging message sent by the first communication node, and thus the second communication node may not send the paging message to the first communication node. Therefore, unnecessary signalings sent by the second communication node to the first communication node can be reduced, thereby improving communication efficiency.

If it is determined that the type of the UE paged by the paging message is the type of the UE that is allowed to reside on the first communication node, it can be determined that the paged UE can receive the paging message sent by the first communication node, and thus the second communication node may send the paging message to the first communication node, which can increase the probability of the UE being paged.

For example, the first communication node is a base station and the second communication node is a core network. When the core network determines that the base station does not allow a specific type of UE to reside through the first information, the core network may not initiate paging of that type of UE to the base station.

For paging of a UE that is in an inactive state, the first communication node is a base station adjacent to an anchor base station, when the anchor base station learns that a certain adjacent base station does not support a specific type of UE to reside, it may not initiate paging of that type of UE to the adjacent base station.

In this way, the second communication node determines whether to send a paging message to the first communication node based on the access capability of the access layer of the first communication node, which can reduce unnecessary signalings sent by the second communication node to the first communication node, thereby improving communication efficiency.

In an embodiment, receiving the first information from the first communication node, includes one of following:
receiving an NG SETUP Request message including the first information from the first communication node;
receiving an Xn SETUP Request message including the first information from the first communication node; or
receiving an Xn SETUP Response message including the first information from the first communication node.

The NG SETUP Request message is used to request establishment of an NG interface between the core network and the base station. The Xn SETUP Request message is used to request establishment of an Xn interface between base stations. The Xn SETUP Response message is used to respond to a request from a peer base station to establish an Xn interface between base stations.

In an embodiment, the first communication node may send the first information to the second communication node by carrying it in a non-UE-associated signaling.

In an embodiment, for the NR system, when establishing the NG interface, the base station can carry the first information in the NG SETUP Request message.

In an embodiment, for the NR system, when establishing the Xn interface between base stations, the base station may carry the first information in the Xn SETUP Request message or the Xn SETUP Response message.

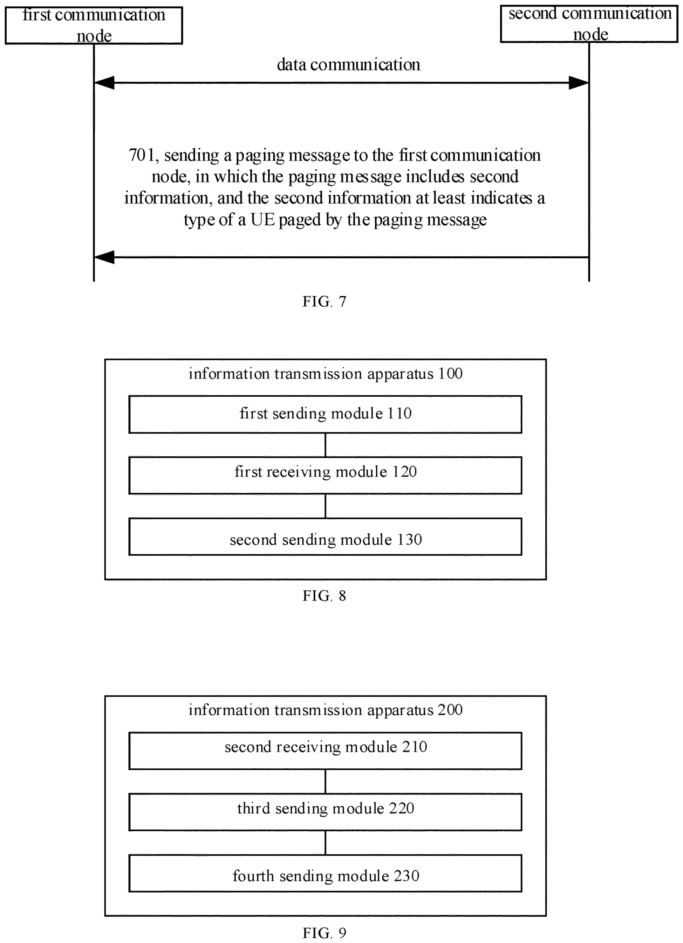

FIG. 7 is a flowchart of an information transmission method illustrated according to an embodiment. The method is performed by a second communication node of a cellular mobile communication system. The method includes the following steps.

At step 701, a paging message is sent to the first communication node, in which the paging message includes second information, and the second information at least indicates a type of a UE paged by the paging message.

Step 701 may be implemented alone or in combination with the steps of the method shown in FIG. 6 and/or step 501.

The paging message may be a core network paging message or a RAN paging message. When the first communication node is a RAN node and the second communication node is a core network node, the second communication node may send the core network paging message to the first communication node. When the first communication node and the second communication node are different RAN nodes, the second communication node may send the RAN paging message to the first communication node.

When the second communication node has a paging message to be sent to the UE through the first communication node, the paging message may be sent to the first communication node, and the first communication node can transmit it to the UE. The paging message may carry the second information for indicating the type of the UE paged by the paging message.

The first communication node may determine, based on the second information in the paging message, the type of the UE paged by the paging message.

The first communication node may determine whether to send the paging message according to the type of the UE paged by the paging message and whether a certain type of UE is allowed to reside on the first communication node.

In an example, the CN carries the second information in a CN paging message to indicate the type of the paged UE.

In an example, the CN carries the second information in the CN paging message to indicate that the paged UE is a Redcap UE.

In an example, the CN carries the second information in the CN paging message to indicate that the paged UE is a 1RX Redcap UE or a 2RX Redcap UE.

In an example, the anchor base station carries the second information in the RAN paging message to indicate the type of the paged UE.

In an example, the anchor base station carries the second information in the RAN paging message to indicate that the paged UE is a Redcap UE.

In an embodiment, the anchor base station carries the second information in the RAN paging message to indicate that the paged UE is a 1RX Redcap UE or a 2RX Redcap UE.

In an embodiment, the method further includes:
the first communication node sending the paging message in response to determining, based on the second information, that the first communication node allows access of the type of the paged UE;
   or,
the first communication node ignoring the paging message in response to determining, based on the second information, that the first communication node does not allow access of the type of the paged UE.

If the first communication node determines that the first communication node allows access of the type of the UE paged by the paging message, i. e., the type of the UE paged by the paging message is allowed to reside on the first communication node, the paging message may be sent.

If the first communication node determines that the first communication node does not allow access of the type of the UE paged by the paging message, i.e., the type of the UE paged by the paging message is not allowed to reside on the first communication node, even if the paging message is sent, the UE cannot be paged, and thus the first communication node may not send the paging message.

In an embodiment, the method further includes:
in response to determining, based on the second information, that a cell of the first communication node allows access of the type of the UE paged by the paging message, sending the paging message in the cell that allows access of the type of the UE paged by the paging message;
   or,
in response to determining, based on the second information, that a cell of the first communication node does not allow access of the type of the UE paged by the paging message, withholding from sending the paging message in the cell that does not allow access of the type of the UE paged by the paging message.

A specific example is provided below in combination with any of the above embodiments.
1. auxiliary information (including the first information and the second information described above) is exchanged between communication nodes, for a negotiation mechanism for paging.
   a) The interaction between communication nodes may be between base stations; or
   b) The interaction between communication nodes may be between a base station and a CN.
2. The capability of the access layer (AS layer) of the base station is negotiated between communication nodes through a non UE-associated signaling process.
   a) As an embodiment, for the NR system, when establishing an NG interface, a base station may notify a CN of the capability of the AS layer of the base station via an NG SETUP Request message.
   b) As an embodiment, for the NR system, when establishing an interface between base stations, a base station may notify the capability of the AS layer of the base station via an Xn SETUP Request message.
   c) The interaction contents include the following information:
      the base station informs the CN that a certain type of UE is not allowed to reside on the base station;
      the base station informs the CN that a Redcap UE is not allowed to reside on the base station;
      the base station informs the CN that a 1RX Redcap UE is not allowed to reside on the base station; or
      the base station informs the CN that a 2RX Redcap UE is not allowed to reside on the base station, which implicitly implies that a 1RX Redcap UE is not allowed to reside on the base station.
   d) Further, the granularity negotiated between network elements can be either for the base station or for the cell.
3. When a target node receives the capability of the AS layer of the base station, the information can be used as a reference for paging.
   a) As an embodiment, the target node is a CN, when the CN learns that a certain base station does not support a specific type of UE to reside, the CN may not initiate paging of that type of UE to that base station;
   b) As an embodiment, the target node is an adjacent base station, when the CN learns that a certain base station does not support a specific type of UE to reside, the adjacent base station may not initiate paging of that type of UE to that base station (i.e., paging a UE that is in an inactive state).
4. The node carries paging auxiliary information in a paging message when sending the paging message, and the information can be used as a reference for paging.
   a) As an embodiment, a CN carries a type of a target UE to be paged in a CN paging message.
   b) As an embodiment, the type of the target UE to be paged carried by the CN in the CN paging message is a Redcap type.
   c) As an embodiment, the type of the target UE to be paged carried by the CN in the CN paging message is a 1RX Redcap UE or a 2RX Redcap UE.
   d) As an embodiment, an anchor base station carries the type of the target UE to be paged in a RAN paging message.
   e) As an embodiment, the type of the target UE to be paged carried by the anchor base station in the RAN paging message is a Redcap UE.
   f) As an embodiment, the type of the target UE to be paged carried by the anchor base station in the RAN paging message is a 1RX Redcap UE or a 2RX Redcap UE.
5. When sending a paging message to the base station, the base station may carry the paging auxiliary information in the paging message, and the information can be used as a reference for paging.
   a) When learning that a certain base station does not support a specific type of UE to reside, paging of that type of UE may be not sent to the base station.

FIG. 8 is a block diagram of an information transmission apparatus illustrated according to an embodiment. The apparatus is applied to a first communication node of cellular mobile wireless communication. The apparatus 100 includes:
a first sending module 110, configured to send first information to a second communication node, in which the first information is at least used to determine a type of a UE that is not allowed to reside on the first communication node or to reside in a cell of the first communication node.

In an embodiment, the first sending module 110 is further configured to perform one of following:
sending an NG SETUP Request message including the first information to the second communication node;
sending an Xn SETUP Request message including the first information to the second communication node; or
sending an Xn SETUP Response message including the first information to the second communication node.

In an embodiment, the apparatus 100 further includes:
a first receiving module 120, configured to receive a paging message from the second communication node, in which the paging message includes second information, and the second information at least indicates a type of a UE paged by the paging message.

In an embodiment, the apparatus further includes: a second sending module 130 configured to:
send the paging message in response to determining, based on the second information, that the first communication node allows access of the type of paged UE paged by the paging message;
   or,
ignore the paging message in response to determining, based on the second information, that the first communication node does not allow access of the type of the UE paged by the paging message.

In an embodiment, the first communication node is a RAN node, and the second communication node is a CN node;
or,
the first communication node and the second communication node are different RAN nodes.

FIG. 9 is a block diagram of an information transmission apparatus illustrated according to an embodiment. The apparatus is applied to a second communication node of cellular mobile wireless communication. The apparatus 200 includes:
a second receiving module 210, configured to receive first information from a first communication node, in which the first information is at least used to determine a type of UE that is not allowed to reside on the first communication node or to reside in a cell of the first communication node.

In an embodiment, the apparatus 200 further includes: a third sending module 220 configured to:
in response to determining that a type of a UE paged by a paging message is the type of the UE that is not allowed to reside on the first communication node, withhold from sending the paging message to the first communication node;
   or;
in response to determining that a type of a UE paged by a paging message is the type of the UE that is not allowed to reside in the cell of the first communication node, withhold from sending the paging message to the first communication node.

In an embodiment, the second receiving module 210 is configured to perform one of following:
receiving an NG SETUP Request message including the first information from the first communication node;
receiving an Xn SETUP Request message including the first information from the first communication node; or
receiving an Xn SETUP Response message including the first information from the first communication node.

In an embodiment, the apparatus 200 further includes:
a fourth sending module 230, configured to send a paging message to the first communication node, in which the paging message includes second information, and the second information at least indicates a type of a UE paged by the paging message.

In an embodiment, the first communication node is a RAN node, and the second communication node is a CN node;
or,
the first communication node and the second communication node are different RAN nodes.

In an embodiment, the first sending module 110, the first receiving module 120, the second sending module 130, the second receiving module 210, the third sending module 220 and the fourth sending module 230 can be implemented as one or more central processing units (CPUs), graphics processing units (GPUs), baseband processors (BPs), application specific integrated circuits (ASICs), Digital Signal Processors (DSPs), programmable logic devices (PLDs), complex programmable logic devices (CPLDs), field programmable gate arrays (FPGAs), general-purpose processors, controllers, Micro Controller Units (MCUs), microprocessors, or other electronic components to execute the aforementioned method.

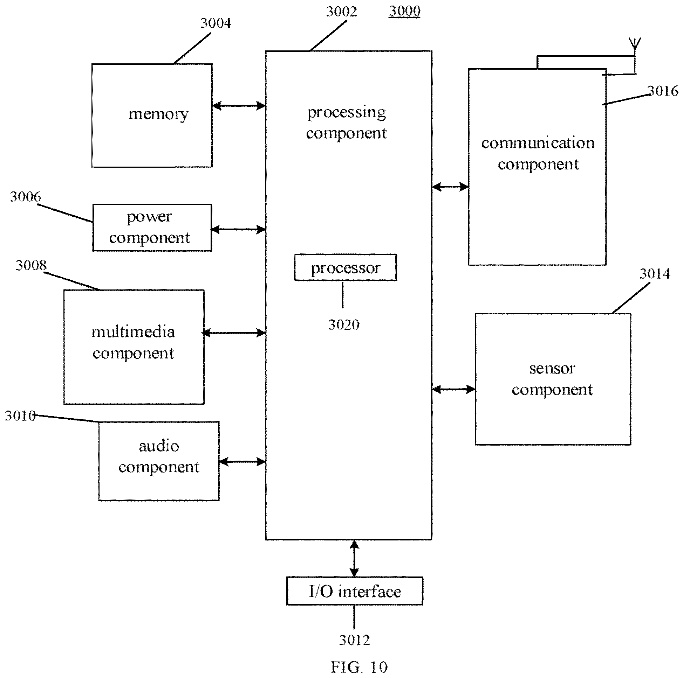

FIG. 10 is a block diagram of an information transmission device 3000 illustrated according to an exemplary embodiment. For example, the device 3000 may be a mobile phone, a computer, a digital broadcasting terminal, a message transceiver device, a game console, a tablet device, a medical device, a fitness device and a personal digital assistant.

As illustrated in FIG. 10, the device 3000 may include one or more of the following components: a processing component 3002, a memory 3004, a power component 3006, a multimedia component 3008, an audio component 3010, an input/output (I/O) interface 3012, a sensor component 3014, and a communication component 3016.

The processing component 3002 typically controls overall operations of the device 3000, such as the operations associated with display, telephone calls, data communications, camera operations, and recording operations. The processing component 3002 may include one or more processors 3020 to execute code instructions to perform all or part of the steps in the above described method. Moreover, the processing component 3002 may include one or more modules which facilitate the interaction between the processing component 3002 and other components. For example, the processing component 3002 may include a multimedia module to facilitate the interaction between the multimedia component 3008 and the processing component 3002.

The memory 3004 is configured to store various types of data to support the operation of the device 3000. Examples of such data include instructions for any applications or methods operated on the device 3000, contact data, phonebook data, messages, pictures, videos, etc. The memory 3004 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 3006 provides power to various components of the device 3000. The power component 3006 may include a power management system, one or more power sources, and any other components associated with the generation, management, and distribution of power in the device 3000.

The multimedia component 3008 includes a screen providing an output interface between the device 3000 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a duration and a pressure associated with the touch or swipe action. In some embodiments, the multimedia component 3008 includes a front-facing camera and/or a rear-facing camera. When the device 3000 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 3010 is configured to output and/or input audio signals. For example, the audio component 3010 includes a microphone (MIC) configured to receive an external audio signal when the device 3000 is in an operation mode, such as a call mode, a recording mode, and a voice recognition mode. The received audio signal may be further stored in the memory 3004 or transmitted via the communication component 3016. In some embodiments, the audio component 3010 further includes a speaker to output audio signals.

The I/O interface 3012 provides an interface between the processing component 3002 and peripheral interface modules, such as a keyboard, a click wheel, buttons, and the like. The buttons may include, but are not limited to, a home button, a volume button, a starting button, and a locking button.

The sensor component 3014 includes one or more sensors to provide status assessments of various aspects of the device 3000. For instance, the sensor component 3014 may detect an open/closed status of the device 3000, relative positioning of components, e.g., the display and the keypad, of the device 3000, a change in position of the device 3000 or a component of the device 3000, a presence or absence of user contact with the device 3000, an orientation or an acceleration/deceleration of the device 3000, and a change in temperature of the device 3000. The sensor component 3014 may include a proximity sensor configured to detect the presence of nearby objects without any physical contact. The sensor component 3014 may also include a light sensor, such as a Complementary Metal Oxide Semiconductor (CMOS) or a Charge-Coupled Device (CCD) image sensor, for use in imaging applications. In some embodiments, the sensor component 3014 may also include an accelerometer sensor, a gyroscope sensor, a magnetic sensor, a pressure sensor, or a temperature sensor.

The communication component 3016 is configured to facilitate communication, wired or wirelessly, between the device 3000 and other devices. The device 3000 can access a wireless network based on a communication standard, such as Wi-Fi, 2G or 3G, or a combination thereof. In an embodiment, the communication component 3016 receives a broadcast signal from an external broadcast management system or broadcast associated information via a broadcast channel. In an embodiment, the communication component 3016 further includes a Near Field Communication (NFC) module to facilitate short-range communication. For example, the NFC module may be implemented based on a Radio Frequency Identification (RFID) technology, an Infrared Data Association (IrDA) technology, an Ultra-Wide Band (UWB) technology, a Blue Tooth (BT) technology, and other technologies.

In an exemplary embodiment, the device 3000 may be implemented with one or more Application Specific Integrated Circuits (ASICs), DSPs, Digital Signal Processing Devices (DSPDs), Programmable Logic Devices (PLDs), Field Programmable Gate Arrays (FPGAs), controllers, micro-controllers, microprocessors or other electronic components, for performing the above described method.

In the exemplary embodiments, there is also provided a non-transitory computer readable storage medium including instructions, such as the memory 3004, executable by the processor 3020 in the device 3000, for performing the above method. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. An information transmission method, applied to a first communication node, comprising:
sending a first information to a second communication node, wherein the first information is at least used to determine a type of a user equipment (UE) that is not allowed to reside on the first communication node or to reside in a cell of the first communication node.

2. The method of claim 1, wherein the sending the first information to the second communication node, comprises one of following:
sending a next generation (NG) SETUP Request message comprising the first information to the second communication node;
sending an Xn SETUP Request message comprising the first information to the second communication node; or
sending an Xn SETUP Response message comprising the first information to the second communication node.

3. The method of claim 1, further comprising:
receiving a paging message from the second communication node, wherein the paging message comprises a second information, and the second information at least indicates a type of a UE paged by the paging message.

4. The method of claim 3, further comprising:
sending the paging message in response to determining, based on the second information, that the first communication node allows access of the type of the UE paged by the paging message; or
ignoring the paging message in response to determining, based on the second information, that the first communication node does not allow access of the type of the UE paged by the paging message .

5. The method of any one of claims 1-4, wherein
the first communication node is a Radio Access Network (RAN) node, and the second communication node is a core network node; or,
the first communication node and the second communication node are different RAN nodes.

6. An information transmission method, applied to a second communication node, comprising:
receiving a first information from a first communication node, wherein the first information is at least used to determine a type of a user equipment (UE) that is not allowed to reside on the first communication node or to reside in a cell of the first communication node.

7. The method of claim 6, further comprising:
withholding from sending a paging message to the first communication node, in response to determining that a type of a UE paged by the paging message is the type of the UE that is not allowed to reside on the first communication node; or
withholding from sending a paging message to the first communication node, in response to determining that a type of a UE paged by the paging message is the type of the UE that is not allowed to reside in the cell of the first communication node.

8. The method of claim 6, wherein the receiving the first information from the first communication node, comprises one of following:
receiving a next generation (NG) SETUP Request message comprising the first information from the first communication node;
receiving an Xn SETUP Request message comprising the first information from the first communication node; or
receiving an Xn SETUP Response message comprising the first information from the first communication node.

9. The method of claim 6, further comprising:
sending a paging message to the first communication node, wherein the paging message comprises a second information, and the second information at least indicates a type of a UE paged by the paging message.

10. The method of any one of claims 6-9, wherein
the first communication node is a Radio Access Network (RAN) node, and the second communication node is a core network node; or
the first communication node and the second communication node are different RAN nodes.

11. An information transmission apparatus, applied to a first communication node, comprising:
a first sending module, configured to send a first information to a second communication node, wherein the first information is at least used to determine a type of a user equipment (UE) that is not allowed to reside on the first communication node or to reside in a cell of the first communication node.

12. The apparatus of claim 11, wherein the first sending module is further configured to perform one of following:
sending a next generation (NG) SETUP Request message comprising the first information to the second communication node;
sending an Xn SETUP Request message comprising the first information to the second communication node; or
sending an Xn SETUP Response message comprising the first information to the second communication node.

13. The apparatus of claim 11, further comprising:
a first receiving module, configured to receive a paging message from the second communication node, wherein the paging message comprises a second information, and the second information at least indicates a type of a UE paged by the paging message.

14. The apparatus of claim 13, further comprising a second sending module configured to:
send the paging message in response to determining, based on the second information, that the first communication node allows access of the type of paged UE paged by the paging message; or
ignore the paging message in response to determining, based on the second information, that the first communication node does not allow access of the type of the UE paged by the paging message.

15. The apparatus of any one of claims 11-14, wherein
the first communication node is a Radio Access Network (RAN) node, and the second communication node is a core network node; or
the first communication node and the second communication node are different RAN nodes.

16. An information transmission apparatus, applied to a second communication node, comprising:
a second receiving module, configured to receive a first information from a first communication node, wherein the first information is at least used to determine a type of a user equipment (UE) that is not allowed to reside on the first communication node or to reside in a cell of the first communication node.

17. The apparatus of claim 16, further comprising a third sending module configured to:
withhold from sending a paging message to the first communication node, in response to determining that a type of a UE paged by the paging message is the type of the UE that is not allowed to reside on the first communication node; or
withhold from sending a paging message to the first communication node, in response to determining that a type of a UE paged by the paging message is the type of the UE that is not allowed to reside in the cell of the first communication node.

18. The apparatus of claim 16, wherein the second receiving module is configured to perform one of following:
receiving a next generation (NG) SETUP Request message comprising the first information from the first communication node;
receiving an Xn SETUP Request message comprising the first information from the first communication node; or
receiving an Xn SETUP Response message comprising the first information from the first communication node.

19. The apparatus of claim 16, further comprising:
a fourth sending module, configured to send a paging message to the first communication node, wherein the paging message comprises a second information, and the second information at least indicates a type of a UE paged by the paging message.

20. The apparatus of any one of claims 16-19, wherein
the first communication node is a Radio Access Network (RAN) node, and the second communication node is a core network node; or
the first communication node and the second communication node are different RAN nodes.

21. A communication device comprising a processor, a memory and executable programs stored on the memory and executable by the processor, wherein when the executable programs are executed by the processor, steps of the information transmission method of any one of claims 1-5 or 6-10 are implemented.

22. A storage medium having executable programs stored thereon, wherein when the executable programs are executed by a processor, steps of the information transmission method of any one of claims 1-5 or 6-10 are implemented.
